(19) Europäisches Patentamt
European Patent Office
Office européen des brevets

(11) **EP 2 330 843 A1**

(12) **EUROPEAN PATENT APPLICATION**

(43) Date of publication:
**08.06.2011 Bulletin 2011/23**

(51) Int Cl.:
*H04W 24/06* (2009.01)   *H04B 17/00* (2006.01)

(21) Application number: **09177925.6**

(22) Date of filing: **03.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Nomor Research GmbH**
**81541 München (DE)**

(72) Inventor: **Seidel, Eiko**
**81541 München (DE)**

(74) Representative: **Stöckeler, Ferdinand et al**
**Schoppe, Zimmermann, Stöckeler & Zinkler**
**Patentanwälte**
**Postfach 246**
**82043 Pullach bei München (DE)**

(54) **Apparatus and method for providing a control signal**

(57)   An apparatus (100) for providing a control signal for a transceiver (200) of a mobile communication network. The apparatus (100) comprises a means (110) for simulating the mobile communication network in accordance with a predetermined simulation setting, the mobile communication network having a plurality of virtual transceivers. The apparatus (100) further comprises a means (120) for mapping the transceiver (200) to one of the plurality of virtual transceivers and a means (130) for determining a signal of the mapped virtual transceiver based on the simulation describing the behavior of the virtual transceiver in the mobile communication network based on the predetermined simulation setting. The apparatus (100) further comprises a means (140) for processing the signal to obtain the control signal and a means (150) for outputting the control signal to the transceiver (200).

FIGURE 5

**Description**

The present invention is in the field of mobile communications, especially in the field of testing and test equipment for components of mobile communication systems and networks.

Today's mobile communication systems are becoming more and more complex, where at the same time, product and technology cycles and required time-to-market is getting shorter. This requires research, development, and design teams to work in parallel to each other and asks for advanced testing methods before integration of the various developed modules. Due to the ever increasing optimization the different modules, different layer and different entities influence each other. Extensive use of so called cross layer design is being made. Furthermore, today's transceivers are getting more and more adaptive to the mobile channel, which is changing fast over time, over different frequencies and also over different spatial domains that can be exploited with advanced antenna schemes. In a new mobile communication standard such as 3GPP LTE (3GPP = 3$^{rd}$ Generation Partnership Project, LTE = Long Term Evolution) such adaptations are done on slot (0.5ms) or sub-frame level (1ms), to be able to follow even fast fading characteristics. Another new feature in LTE is that the adaptation of the transceivers is usually uncoordinated between transceivers, based on a decentralized architecture. Still the different transceivers will influence each other and can thus not be simply modeled independently. It is of utmost importance for the stability of the system to consider these effects already in the design phase before the system is being deployed. The involved costs for setting up such a large number of transceivers or alternatively the computational complexity of simulating these environments limits the development and test of such adaptive algorithms up to today. The development is thus done partly neglecting the overall system behavior and tests are limited.

Today the development and the testing of algorithms that are impacted by the radio channel can already be done with a hardware channel emulator such as Elektrobit Channel Emulator Propsim or Azimuth ACE™ MX - MIMO Channel Emulator (MIMO = Multiple-Input-Multiple-Output). The hardware channel emulator is installed between the transmitter and receiver and distorts the physical signal that is being transmitted. The channel behavior follows defined channel models whereas the RF signals are processed in real-time. A good introduction of LTE testing with a hardware radio channel emulator is provided by White Paper Elektrobit, "Beyond Conformance Testing in 3GPP LTE" http://www.elektrobit.com/file.php?1695. This equipment is highly expensive due to the real-time processing of the radio signal. The hardware emulators are also limited in their capabilities such as the number of users that can be modeled. With MIMO technology the number of paths that are being modeled per user also increases and makes it even more complex to model a large number of users. Relatively simple channel models are used to make the processing feasible. Due to the related cost there is usually just a single device in a lab for conformance test. The hardware radio channel emulator cannot be used in the development process of those algorithms or in load and performance tests with a larger number of users. In any case due to the limited nature of looking at a small number of independent channels many effects are lost. LTE is for instance designed for a frequency reuse of one, so a transceiver in a neighbor cell will use the same frequency. This means every transceiver will generate interference to all transceivers in all neighbor cells using the same frequency and on the other side will also experience interference from all the transceivers that are transmitting in the neighbor cells on the same frequency. The above described channel models are independent from each other. Modeling of the interference between cells therefore is critical.

In other words, within a mobile communication system, especially when using a frequency reuse of one, there is strong coupling between the cells. Inter-cell interference as well as Intra-cell interference cause many dynamic effects in such a network. When developing components of such a network, as for example base stations, mobile stations and relay stations, it is therefore critical to consider these effects, as they strongly influence the stability, performance and capacity of such networks. With the prior art approach, such system level aspects are evaluated at a rather late stage of the development of the network components. Therefore, high efforts are taken to carry out expensive system level tests, which use either small networks which are solely implemented for testing purposes, or within a lab, however as described above, this also involves high costs.

Therefore, it is the object of the present invention to provide an improved concept for testing network components.

The object is achieved by an apparatus for providing a control signal according to claim 1, a method for providing a control signal according to claim 14, and a computer program according to claim 15.

The present invention is based on the finding that simulations and tests can be brought together by utilizing simulation for determining system dynamics and using information from the simulation for influencing a network component under test.

It is a finding of the present invention that system level simulation can be used to simulate a network condition, where the system simulation considers a plurality of network components or transceivers. A transceiver under test can also be simulated within a system level simulation, where the transceiver under test can be influenced by signals determined from the system level situation and the respective simulated transceiver. It is a finding of the present invention that such a transceiver under test can be tested under system level conditions, where the system level conditions are provided by simulation.

It is a finding of the present invention that system level simulation can be carried out in real time, therewith enabling a system level emulation, which can be used for network component testing in real conditions.

It is another finding of the present invention that specific system level effects can be controlled with certain control signals. In other words, in dependence on which network component is under test, certain control signals may be used to influence the network component under test according to a certain system condition, which is simulated for outputting the respective control signal.

It is a finding of the present invention that dependent on a test scenario, which is to be performed by a network component, parallel system level simulation can be carried out at different levels of detail, for or at different protocol layers respectively. For example, if higher layer protocol tests are to be performed, the system level simulation may simulate the rest of the system, i.e. if a single transceiver protocol set is to be tested, the system level simulation may simulate the lower protocol layers of the respective transceiver and the rest of the system.

It is a finding of the present invention that system emulation can actually overtake part of the functionality of a complete or real transceiver to model the overall system behavior. Embodiments may therewith enable testing of real transceivers in a lab environment in simulated real world conditions.

Embodiments of the present invention may therewith provide the advantage that actual development and performance optimization of certain functions can be done within a realistic software based system simulation without the complete system being available. Several parts of the system can be developed in parallel, while not neglecting the overall behavior. Even after integration onto the target platform test efforts and costs can be reduced significantly. Moreover, embodiments of the present invention may provide the advantage that tests can be carried out earlier, errors of the respective components can be detected earlier in the development process, and therefore, time-to-market and development expenditures may be decreased.

Embodiments of the present invention may provide the advantage, that multiple different tests can be carried out using different simulation settings for the system level simulation. In other words, different network situations as for example different load conditions, traffic conditions, service conditions, quality of service conditions, etc. can be considered by a system level simulation through different parameter settings. Parameter and settings of the present invention can be changed more easily, since the transceivers are virtually modeled and thus neither the physical signal as being transmitted nor the physical location of the transceiver has to be modified. The described parameter settings can also be automated by a test environment and regression tests can be conducted each time the system was modified, Therewith, test coverage can be enhanced and again errors may be found and reduced at a lower expense and sooner in the development process.

Embodiments of the present invention will be detailed using the accompanying figures, in which

Fig. 1a    shows an embodiment of an apparatus for providing a control signal;

Fig. 1b    illustrates a system level scenario;

Fig. 2    shows an embodiment in a test setup with a mobile transceiver being connected to a base transceiver;

Fig. 3    shows another embodiment in a test setup in a protocol test for a base transceiver;

Fig. 4    illustrates an embodiment in a test setup for a base transceiver being connected with multiple mobile transceivers; and

Fig. 5    shows an embodiment in a test setup for a protocol test for a mobile transceiver.

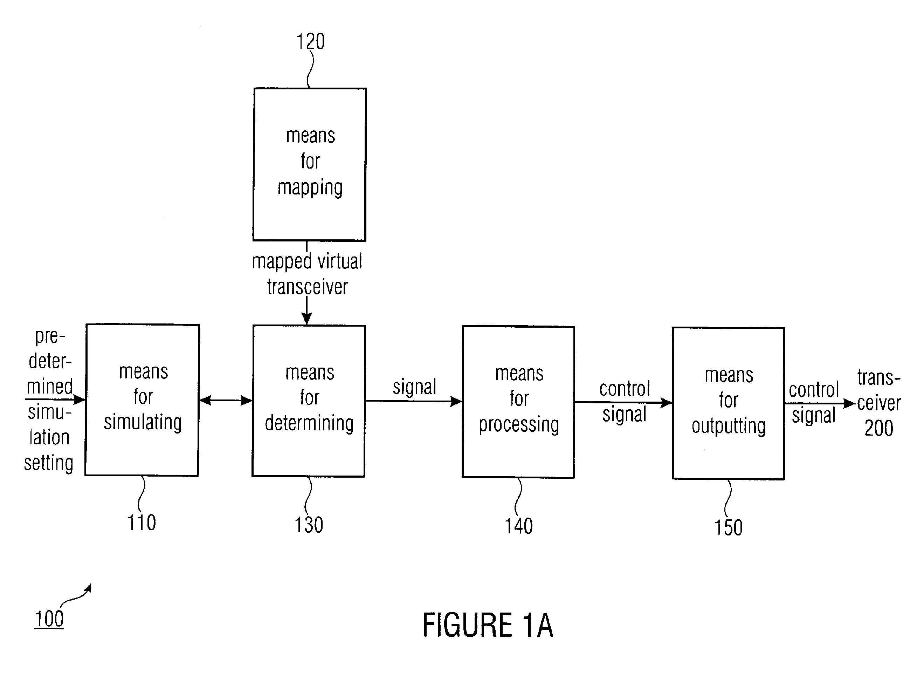

In the following some embodiments will be detailed using illustrations of the figures. Fig. 1a shows an apparatus 100 for providing a control signal for a transceiver 200 of a mobile communication network. In other words, the apparatus can be operative for setting a control signal, for example comprising a transmission quality measure, at a transceiver 200. The transceiver 200 may be under test and the control signal may influence the transceivers 200 behavior.

According to Fig. 1a the apparatus 100 comprises means 110 for simulating the mobile communication network in accordance with a predetermined simulation setting, the mobile communication network having a plurality of virtual transceivers. In other words, the means for simulating can be adapted for simulating a virtual mobile communication network. Such a mobile communication network may be comprised of virtual transceivers, which may, in embodiments, correspond to a virtual mobile station, a virtual base station or a virtual relay station.

In line with Fig. 1a the apparatus 100 further comprises means 120 for mapping the transceiver 200 to one of the plurality of virtual transceivers. In other words, the transceiver 200 under test, may have a virtual corresponding transceiver within the simulation. In other words the transceiver under test will be tested for a specific scenario that is virtually modeled by the simulation. In one example two real transceivers might be physically directly connected, but might virtually at separate locations according to the simulation settings.

The apparatus 100 further comprises means 130 for determining a signal of the mapped virtual transceiver based on the simulation, describing the behavior of the virtual transceivers in the mobile communication network based on the predetermined simulation setting. The apparatus 100 further comprises means 140 for processing the signal to obtain the control signal and means 150 for outputting the control signal to the transceiver 200.

In other words, embodiments may enable a combination of transceiver functionality with dynamic channel emulation based on system level simulation. In embodiments the means 110 for simulating can be adapted for simulating based on a system level simulation modeling one or several virtual base station transceivers and one or several virtual mobile transceivers connected to such virtual base station transceivers. In an embodiment the means 110 for simulating can be adapted for simulating virtual relay stations as well. In such a system level simulation the radio channel may be modeled by a channel model, where such a channel model may independently model the mobile channels between each of the virtual transceivers to calculate the SINR (SINR = Signal-To-Interference-And-Noise-Ratio) levels achieved in the network at one or more of the plurality of virtual transceivers.

In embodiments the means 110 for simulating can be adapted for determining a propagation property measure of a virtual radio channel between the mapped virtual transceiver and another virtual transceiver based on the predetermined simulation setting. In other words, just like in a real system, a radio channel may be considered between transceivers. In embodiments, where a system can be established by virtual base station transceivers and virtual mobile transceivers, a virtual radio channel may be considered between such a virtual base station transceiver and a mobile virtual transceiver. In some embodiments radio channels may be considered for both directions of transmission, namely for the uplink, i.e. for a virtual mobile transceiver transmitting to a virtual base station transceiver, and the downlink, i.e. for a virtual base station transceiver transmitting to a virtual mobile transceiver. Moreover, in other embodiments, where adhoc- or multi-hop connections are considered, radio channels between several mobile transceivers may be considered. In other embodiments, considering virtual relay stations, relaying a signal between a virtual mobile transceiver and a virtual base station transceiver or vice versa, further virtual radio channels between a virtual base station and a virtual relay station, and between a virtual relay station and a virtual mobile station, may be considered.

In embodiments the means 110 can be adapted for simulating an interference measure at a virtual location of the mapped virtual transceiver and/or at the virtual location of the other virtual transceiver. In other words, within a system level simulation, the virtual transceivers may have virtual locations. Between the virtual locations there are virtual distances, which relate, for example, to the path loss in the real world. In embodiments, the means 110 can be adapted for determining an interference measure. In other words, for example in one scenario there may be a virtual base transceiver receiving signals from a plurality of virtual mobile transceivers. At the virtual base transceiver, when considering the signal of one of the plurality of virtual mobile transceivers, all other signals of the non-considered virtual mobile transceivers may be experienced as interference. In a similar way, the downlink direction may be considered in a scenario where a virtual mobile transceiver receives a signal from a virtual base station, being interfered by signals from other virtual base stations to which a respective virtual mobile transceiver may not be connected to.

In embodiments the means 130 for determining can be adapted for determining the signal based on the propagation property measure and the interference measure. In other words, in embodiments, the means for simulating 110 may consider a virtual radio channel between the mapped virtual transceiver and another virtual transceiver to which it transmits a signal, or from which it receives a signal, respectively. The propagation property measure may determine an attenuation of such a radio channel, for which the actual signal is transmitted. Moreover, other radio channels between the interferers and the virtual transceiver, the other transceiver respectively, may be considered to determine the interference. Therewith, the SINR can be evaluated in the simulation and a certain signal, for example a power necessary to achieve an SINR target, can be determined from the simulation.

In embodiments, the signal level may be calculated considering the path loss and the effects of the radio channel, between two virtual transceivers, as, for example, slow and fast fading, which may also depend on the speed in case of virtual mobile transceivers, as well as on, for example, antenna beamforming or diversity transmission/reception and other phenomena influencing the radio channel.

The means 110 for simulating can be adapted for simulating the mobile communication network comprising a plurality of virtual transceivers, e.g. at least one virtual base station and at least one virtual mobile station. The means 120 for mapping can be adapted for mapping the transceiver 200 to the at least one virtual base station or the at least one virtual mobile station.

In embodiments, the means 110 for simulating can be adapted for determining a location of a virtual transceiver based on the predetermined simulation setting. In embodiments the predetermined simulation setting may for example comprise geographical data or maps, a mobility model describing the mobility of virtual mobile transceivers, dynamic input parameters, path loss models, etc.

In embodiments the means 110 for simulating may be adapted for simulating the propagation property using defined channel models, from, for example, ITU, 3GPP, WINNER (WINNER = Wireless world INitiative New Radio) or the IMT advance project, models for pedestrian environments, vehicular environments, spatial channel models (SCM), SCM extended channel models etc. In embodiments the means 110 for simulating the propagation property measure may be adapted for using look up tables to determine the propagation property measure. Such a look up table may be derived by link level simulations or other pre-calculated values or tables such as fading files, shadowing maps, ray tracing tools etc.

Generally, the interference may be the sum of all interferers in all neighbor cells and this may render the computation extensive. Besides all of the transmit parameters and the dynamic adaptations of the various transceivers also the effects of all the different mobile radio channels may be considered. In embodiments, the locations and the mobility of the various or the plurality of the transceivers in the system may have a strong impact on SINR calculations.

Conventionally, system level simulations can be used in research, development and standardization and are mostly using the same models as the radio channel emulator products. 3GPP, cf. e.g. ETSI TR 101 112 v3.2.0: Selection procedures for the choice of radio transmission technologies of the UMTS, UMTS 30.03 version 3.2.0, April 1998, and ITU, cf. e.g. ITU-R M1034: "Requirements for the Radio Interfaces(s) for Future Public Land Mobile Telecommunication Systems (FPLMTS)", are partly using agreed models that may be reused in embodiments by the means 110 for simulating. Such an embodiment will in the following also be referred to as a Nomor channel emulation (NCE = Nomor Channel Emulation).

In embodiments, such a channel model considered by the means 110 for simulating may include a physical layer model for OFDMA (OFDMA = Orthogonal Frequency Division Multiple Access) and/or SC-FDMA (SC-FDMA = Single Carrier - Frequency Division Multiple Access) or other access schemes, cell layouts, antenna patterns, MIMO models, path loss models, shadowing (slow fading) models, fast fading models, mobility models, inter-cell interference, signal-to-interference ratio calculation (SIR = Signal-to-Interference-Ratio), error modeling, etc.

The means 110 for simulating can be further adapted for considering interference measures based on virtual transceivers transmitting on the same frequency, considering the output power of the other transceivers and determining the propagation property of the radio channel between the mapped virtual transceiver and other virtual transceivers. Actually the interference might even need to be considered if the transceivers operate at different frequencies. Such an example are so called co-existence tests between systems that interfer each other strongly. Co-existence test between Frequency Division Duplex and Time Division Duplex technologies are an area where inter-system interference cannot be neglected.

Embodiments may be used in different test setups. For example, embodiments may be used with the transceiver 200 comprising a real mobile transceiver for a mobile communication network. In other embodiments, the apparatus 100 may be adapted for outputting control signals for multiple real mobile transceivers. The position of the mobile transceiver(s) within the test setup can be considered in the process of mapping them to the virtual transceivers. The mobile transceiver(s) can be directly connected to the base transceiver leaving the modeling of the channel completely to the simulation.

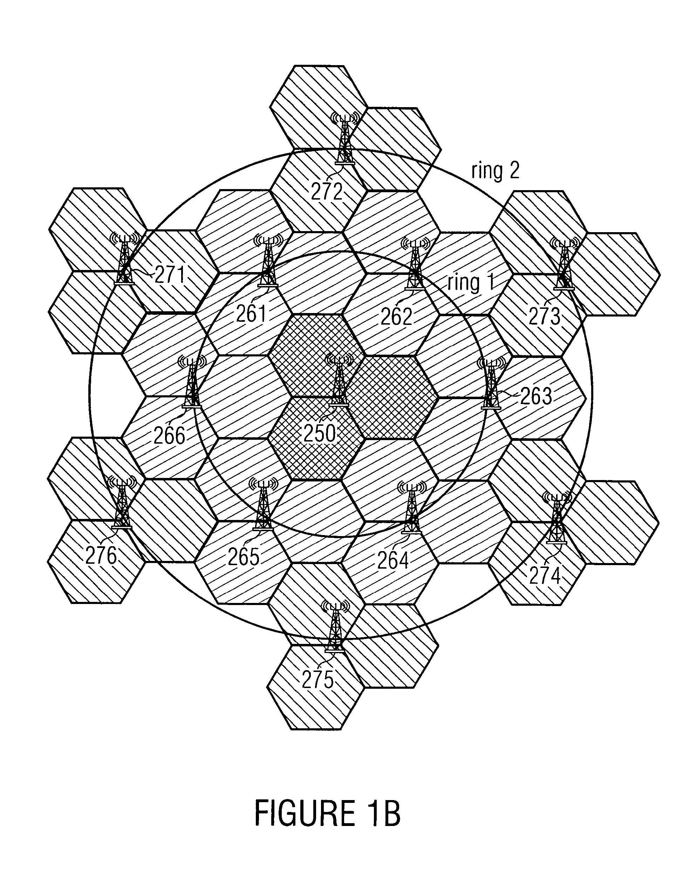

In some embodiments, a part of the physical layer functionality and some of the radio channel effects may be calculated offline in so-called link level simulations. The results from the link level simulations can be used in the system level simulations to increase the speed of the processing. Fig. 1b shows a scenario, which may be given as part of the predetermined simulation setting. Fig. 1b shows a model of a cellular network, in which the virtual base station transceiver 250 is located in the center. The virtual base station transceiver 250 is surrounded by a first ring of further virtual base station transceivers 261-266. The virtual base station transceivers 261-266, which are located on the first ring are also referred to as the first tier of the network with respect to the base station transceiver 250. Furthermore, the virtual base station transceiver 250 is surrounded by a second tier or second ring of base stations 271-176. Fig. 1b does not show any virtual mobile transceivers, for simplicity purposes. Fig. 1b shows a cellular structure through which virtual mobile transceivers may move.

Embodiments may use advanced algorithms that allow the system simulation to run at high speed or even to run in real-time. Particularly the efficient modeling of the inter-cell interference is of large importance in embodiments.

The downlink inter-cell interference as experienced by a mobile transceiver can for example be calculated in the following way:

$$I_{UE,u}(t) = \sum_b P_b(t) \cdot L\big(d_{b,u}(t)\big) \cdot f\big(d_{b,u}(t), \varphi_{b,u}(t)\big) \cdot G\big(\varphi_{b,u}(t)\big)$$

u        mobile station index

b        base station index

$P_b$ Power transmitted per Base Station

L Path loss depending on distance from the bs

$d_{b,u}$ Distance between base station and terminal

f Fast fading and slow fading (shadowing)

$\varphi_{b,u}$ Angle within the sector of the base station

G Antenna gain

Each interference contribution is affected by the mobile channel between the virtual transceiver generating the interference (transmitting to another transceiver it is connected to) and the respective transceiver where the interference is experienced. Nevertheless the resource allocation, link adaptation etc. is decided by a scheduler of the activated base transceiver of the respective neighbor cell, which is usually adaptive to a different mobile channel, i.e. the mobile channel in the neighbor cell between the two transceivers that are communicating with each other. For simplification, in some embodiments, it may be assumed that base stations use their available power completely, i.e. each tone or subcarrier or resource block is transmitted with same power ant the maximum power can be divided by the number of tones or subcarriers or resource blocks, which is a pessimistic approach but correct for a fully loaded cell.

The inter-cell interference calculation is largely defined by the cell layout and cell configuration. In one embodiment a uniform cell distribution as shown in Fig. 1b can be used with the cell radius and the number of cells, e.g. defined as number rings, being provided as part of the system configuration or predetermined simulation setting. Alternatively the cell configuration can be real geographical data with GPS coordinates that define the coordinates of the base transceiver positions.

The uplink interference as experienced by the base transceiver can be calculated in the following way:

$$I_{BS}(t) = \sum_b \sum_u P_{b,u}(t) \cdot L\big(d_{b,u}(t)\big) \cdot f\big(d_{b,u}(t), \varphi_{b,u}(t)\big) \cdot G\big(\varphi_{b,u}(t)\big)$$

$P_{b,u}$ Power transmitted by the UE as received per base station transceiver

The uplink interference model is even more complex and demanding in terms of simulation since the interference comes from mobiles in neighbor cells which are not static but move. A user at the cell edge might on the one side generate a lot of interference to the neighbor cell, but will also experience a lot of interference from the neighbor cells. The mobility of the users can be modeled based on configurations provided via the system configuration or predetermined simulation setting. Alternatively the movement might also follow real geographical trace files. The movement, the direction and the speed of a mobile transceiver have a large impact on the adaptation algorithms that run within the system. Besides the dynamic frequency selective resource allocation, systems like LTE may use other complex adaptations such as uplink power control, evoking changes of the power over frequency and time. Another important use case that can be modeled by an embodiment is the handover of a mobile transceiver that moved through the network and changes its connection from one base transceiver to another base transceiver. More detailed explanations for the use case will be provided later on.

Because real time constraints may not allow emulation of scheduling and UE transmissions in neighbor cells, in embodiments realistic inter-cell interference may be emulated by recording the behavior of the cell of interest's scheduler and mobiles, and generate inter-cell interference based on this behavior. As a result, all cells within the system may behave similarly. It is possible to store such a behavior in a pattern file for being used in later simulations (offline method). It is also possible to perform an online feedback with a random time delay distribution during runtime of the simulation in embodiments. In the downlink, either some statistical parameters of resource utilization and power allocation can be recorded and re-used, or alternatively the exact allocation and power assignment can be recorded and used for interference generation in embodiments. The feedback model can be employed in the interference calculation for both up- and downlink. It can be assumed that it is practically not feasible to run respective simulations as described in real-time without unveiled simplifications.

In embodiments another source of complexity may be the modeling of the MIMO channels that increases with the number of antennas. Embodiments may use a novel method to model 2x2 MIMO spatial multiplexing is provided as example in the following. Link Level Simulations can be done offline by additional effective fading profiles as outlined by the channel model. These profiles may contain a model of the transmit filter at the eNodeB (eNodeB = LTE Base station Transceiver) and an MMSE (MMSE = Minimum Mean Square Error) receiver at the UE (UE = User Equipment, mobile transceiver) for a given operating point, e.g. an SINR value in dB. The additional profiles allow the simulator to compute a short term SINR value for two streams, in the case of spatial multiplexing, with the influence of inter-stream interference (self-interference) and inter-cell interference. The MIMO implementation may support both open and closed loop MIMO modes in a 2x2 antenna configuration and implements a dynamic switching between single stream and spatial multiplexing transmission. Multiplexing with more than two layers could be modeled as well in embodiments.

The described embodiments for high speed processing may allow the system level simulation to be coupled with a real hardware implementation and to model part or all of the system, to provide measurements at certain transceivers, to model errors in the decoding process of one or multiple receivers, to provide channel feedback reporting or to overtake part of the processing of one or multiple transceivers be it a base transceiver, a mobile transceiver, a relay or any other transmitting and/or receiving transceiver. In a simple embodiment a receiver in communication with a transmitter buffers the received packets while the system emulator 100 actually decides about the correctness of the decoding process. In an embodiment a loss indication can be transmitted from the system emulator 100, i.e. the embodiment, to the transceiver. If a packet loss has been indicated the transceiver may discard the packet, which would be delivered to higher layer otherwise. Thus the embodiments may enable a combination of a transceiver and a system emulation allowing the transmission and reception of realistic signals without the actual physical transmission of the signal over the air. In some embodiments even the processing of the data packets across the Physical Layer may not be required anymore.

In some embodiments the means 130 for determining can be adapted for determining as the signal of the mapped virtual transceiver a protocol information. In other words, embodiments may simulate the protocol stack of a virtual transceiver, where the protocol layers communicate using messages, which are also called primitives. Embodiments may simulate the communication on or between different protocol layers, where according to the above description simulation can be carried out including complete transceivers, i.e. simulating a complete protocol stack of a transceiver. Some embodiments may comprise a detailed protocol stack implementation of the transceivers on top of the physical layer. This might comprise radio protocol stack functions, such as segmentation, encapsulation, multiplexing, prioritization, scheduling, retransmission, reordering, reassembly etc. In LTE these radio protocol functions are called MAC (MAC = Medium Access Control), RLC (RLC = Radio Link Control), PDCP (PDCP = Packet Data Convergency Protocol) and RRC (RRC = Radio Resource Control) layer, cf. 3GPP TS 36321 v8.5.0, March 2009: "Evolved Universal Terrestrial Radio Access (E-UTRA); Medium Access Control (MAC) protocol specification", 3GPP TS 36.322 v8.5.0, March 2009: "Evolved Universal Terrestrial Radio Access (E-UTRA); Radio Link Control (RLC) protocol specification, 3GPP TS 36.323 v8.5.0, March 2009: "Evolved Universal Terrestrial Radio Access (E-UTRA); Packet Data Convergence Protocol (PDCP) specification", 3GPP TS 36.331 v8.5.0, March 2009: "Evolved Universal Terrestrial Radio Access (E-UTRA); Radio Resource Control (RRC) specification".

In embodiments the means (110) can be adapted for simulating the mobile communication network in accordance with the 3GPP LTE specifications.

Particularly, in embodiments the MAC layer may contain a large number of adaptive functions, as e.g. scheduling, load control, inter-cell interference coordination, overload control, power control, link adaptation, adaptive MIMO etc., that can conventionally only be developed and tested in realistic overall system environments, requiring high efforts, proving high costs and being very time consuming. The radio link control (RLC) entity on the other side hosts a large number of complex tasks as e.g. segmentation/reassembly according to the requirements of a specific bearer service, as well as optional backward error correction of corrupt segments by applying ARQ (ARQ = Automatic Retransmission Request) techniques that require testing in real-world environments.

In summary, the system emulation in embodiments might consist of a multi-cell simulation with each virtual base transceiver of the cell being in communication with a number of virtual mobile transceivers whereas all the virtual base transceivers and/or virtual mobile transceivers can be emulated partly or in full detail. Different level of abstractions can be used to facilitate different purposes of the emulated system and to meet the fast processing or even real-time processing requirements in embodiments.

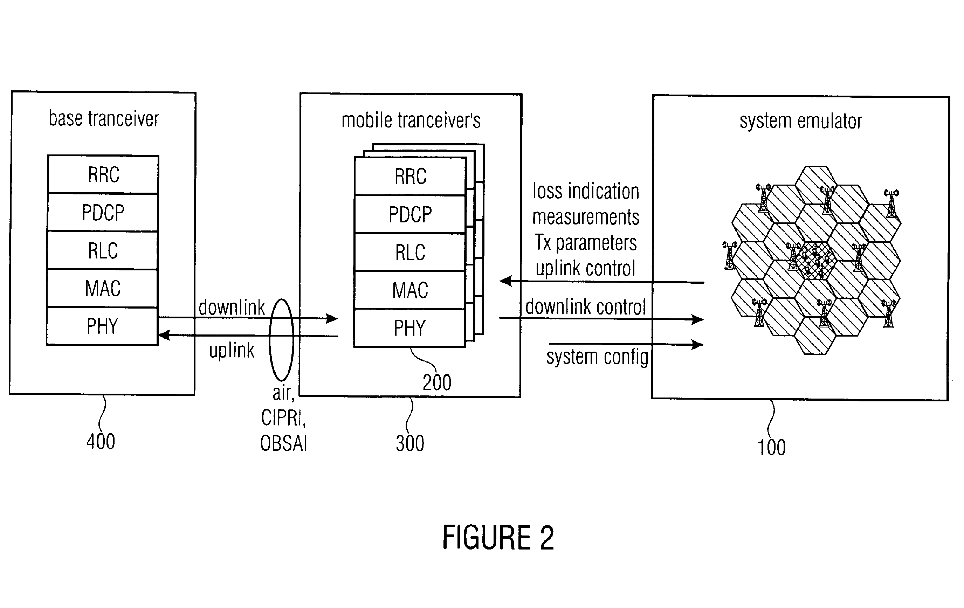

In the following a more detailed embodiment will be described, in which the apparatus 100 is coupled to a real mobile transceiver 200 which is in turn coupled to a real base transceiver 400. The setup of this configuration is shown in Fig. 2. Commonly, the eNB (eNB = eNodeB) functionality is tested using test mobiles. In the near future multi-UE (multi-UE = Multi User Equipment, e.g. multiple mobile transceivers in one housing for test purposes) test mobiles will allow the eNB RRM (RRM = Radio Resource Management) algorithms to be tested (e.g. scheduler). In the following a mobile transceiver may also be referred to as UE, a base transceiver or a base station transceiver may also be referred to as eNB. Furthermore, the multi-UE can be used to perform stress tests on the eNB. The eNB, the test UEs as well as the multi-UE may provide functionality as standardized in the 3GPP specifications.

As shown in Fig. 2 the transceiver 200 may be one of multiple real transceivers, which are summarized in Fig. 2 by the multi-UE 300. In embodiments the means 120 for mapping can be adapted for mapping a plurality of mobile transceivers to a plurality of virtual mobile transceivers, wherein the means 130 for determining can be adapted for determining a plurality of signals of the plurality of mapped virtual mobile transceivers. The means 140 for processing can be adapted for processing the plurality of signals to obtain a plurality of control signals and the means 150 for outputting can be adapted for outputting the plurality of control signals to the plurality of mobile transceivers.

In Fig. 2 the embodiment of the apparatus 100 is also termed system emulator. In Fig. 2, the control signal is exemplified as one of a loss indication, measurements, transmit parameters or uplink control information.

In embodiments, the apparatus 100 may further comprise a means for receiving a transmission control measure from the transceiver 200 and the means 110 for simulating can be adapted for simulating the mapped virtual transceiver based on the transmission control measure. In embodiments the transmission control measure may correspond to one of or a combination of the group of downlink control information, a resource allocation, a modulation/coding parameter, a transport format, frequency hopping information, an MIMO transmit mode, MIMO precoding information, MIMO rank information, transmit power or receive power information, a control format indication, hybrid ARQ information, a redundancy version, a new data indicator, an HARQ (HARQ = hybrid ARQ) process number, transmit power control etc. In embodiments the means 130 for determining can be adapted for determining the signal further based on the transmission control measure.

In other embodiments, the transmission control measure may correspond to one of or a combination of the group of uplink control information, a channel quality measurement, channel quality indicator, transport information, suggested precoding information, a codebook, a precoding matrix indicator, a rank indicator, a hybrid ARQ acknowledgment or not acknowledgement or a receive packet etc.

According to the above specification, in embodiments the transmission control measure may be received for multiple transceivers and for multiple resource allocations.

In some embodiments, the means 150 for outputting the control signal may also comprise the means for receiving the transmission control measure. In other words, the means 150 for outputting and the means for receiving may be implemented as a common interface in embodiments.

Coming back to the setup displayed in Fig. 2, it can be seen that the apparatus 100 receives the predetermined simulation setting in terms of a system configuration. As can be seen in Fig. 2 the multi-UE 300 comprises multiple transceivers, one of which corresponds to the transceiver 200. Within the transceiver 200 Fig. 2 displays the protocol layers, according to the above description. In the setup of Fig. 2, the mobile transceiver 200 is further coupled to a base station transceiver 400, for which the corresponding protocol entities are also displayed. In embodiments, there may be a two-way communication between each of the mobile transceivers 300 and the base transceiver 400, which is indicated by the uplink and downlink arrows in between. The interface between the mobile transceivers 300 and the base transceiver 400 will be described in the following.

As seen in the Fig. 2 the mobile transceiver, for instance a UE or Multi-UE (device that implements multiple UEs), might be coupled to the eNB under test with a cable connection or OBSAI (OBSAI= Open Base Station System Architecture Initiative OBSAI RP3 interface specification http://www.obsai.com/) or CPRI (CPRI = Common Public Radio Interface standard, CPRI Specification versions 4.0 http://www.cpri.info/) standard or via the air interface. For testing in labs a cable interface may typically be used. While this allows for testing of basic functionality, the dynamic effects introduced by the mobile channel of the air interface are not considered. This imposes limitations on tests of algorithms such as link adaptation or dynamic resource allocation. In reality, each user experiences a different mobile channel that varies in time, in frequency and in case of MIMO also in the spatial domain. This affects not only the receive signal in up- and downlink since the transmitted signal is being distorted, but also the eNB and UE transmit parameters since today's eNBs consider the mobile radio channels in its scheduling decisions.

As seen in Fig. 2 the system emulator 100 is connected to the Multi-UE 300, which is processing the signal from the eNB 400. A difference to conventional test setups is that the system emulator 100 may not process the radio signal itself, but will interact with the receiver or the transmitter to model the behavior as introduced by a real channel. The system emulator 100, as in the following will be referred to an embodiment, may not be put in between the transmitter and the receiver, but may interact with either the receiver or transmitter and force a behavior that models a "virtual" channel. As such the processing of the ideal signal (not distorted by the mobile channel) may take place in the receiver (e.g. the Multi-UE) 300 whereas the mobile channel of the multiple users may in parallel be modeled in the system emulator 100, i.e. by an embodiment. Alternatively the mobile transceiver could also be located at a different position within the cell when being in communication with the base transceiver. This should be known to the system emulator. since the calculation of the control signal may consider the mobile channel that is physically present between the base transceiver and the mobile transceiver. The final outcome of the physical layer processing, e.g. decoding of a block successful or not in the real receiver (Multi-UE), may be overwritten by the outcome of the physical channel emulation in the system emulator 100. The system emulator 100 might for instance decide that the reception of a certain block was not successful and therefore the physical layer of the receiver may not pass this block to the higher layer. In an embodiment, e.g. the CRC (CRC = Cyclic Redundancy Check) decision may be overwritten. Similarly, for the uplink direction the system emulator 100 might calculate a certain receive power at the eNB 400, as it would be received when the signal was transmitted via the mobile channel. The system emulator 100 can then inform the physical layer of the transmitter (Multi-UE) 300 to apply this transmit power in the uplink.

In the above embodiment the control signal can correspond to the CRC decision. Multiple other information may be comprised in the control signal. In an embodiment the means 140 for processing can be adapted for obtaining as control signal one of or a combination of the group of a loss indication, an attenuation, a transmit power, a transmit power offset, a timing advance, an error, a successful reception flag to indicate if a data packet was received correctly or not, uplink control information, a channel quality measurement, a channel quality indicator (CQI = Channel Quality Indicator), a transport format, suggested precoding information, codebook based precoding information, a precoding matrix indicator (PMI = Precoding Matrix Indicator), a rank indicator (RI = Rank Indicator), a hybrid ARQ acknowledgement or a non acknowledgement of a received packet, a transmit power control command, transmit power measures, power headroom reports, etc.

Furthermore, in embodiments, the means 140 for processing can be adapted for obtaining as control signal one of or a combination of the group of downlink control information (DCI = Downlink Control Information), a scheduling decision, a resource allocation, a modulation/coding parameter, a transport format, a frequency hopping information, an MIMO transmit mode, MIMO precoding information, MIMO rank information, a transmit power, a receive power information, a control format indication, hybrid ARQ information, a redundancy version, a new data indicator, an HARQ process number, measurement information for a received signal, for example the reference received signal power (RRSP = Reference Received Signal Power), a reference received signal power, a reference signal received quality (RSRQ = Reference Signal Received Quality), a received signal code power, a received signal wideband power, a received signal strength information (RSSI = Received Signal Strength Information), a received energy per chip divided by the power density, a pilot channel strength measurement, measurement information of a transmitted signal, for example a downlink reference signal transmit power, a received interference power, a thermal noise power, etc.

Moreover, in embodiments, the control signal may be specific for one or more data channels such as the physical uplink share channel, a physical random access channel, a physical uplink control channel, a physical downlink shared channel, a physical downlink control channel, a physical hybrid ARQ indicator channel, a physical control format indicator, etc.

In an embodiment the channel emulation may enable the Multi-UE 300 to transmit the signal to the eNB 400 as it would be received by the eNB 400 when being transmitted over the different mobile channels. By this the mobile channel is virtually already considered at the transmission of the signal. Embodiments may therewith enable the execution of a realistic lab test in an environment as otherwise would only be experienced in real field trials.

Based on the channel emulation an embodiment of a system emulator 100 may inform the Multi-UE 300 whether or not a downlink reception was successful. Future systems such as LTE are based on a shared channel approach, where all users are dynamically scheduled sharing the same resource. The error behavior will be highly dependent on the resource allocation which can be signaled by the Multi-UE 300 to the system emulator 100 before the system emulator 100 can make a decision on the success of the decoding. Furthermore, the system emulator 100 may provide the Multi-UE 300 with all parameters that are needed for modeling the uplink transmission over the mobile channel already at the point of transmission.

In the following the information exchange between the entities via the interfaces is explained in more detail as an embodiment. The air interface also called Uu interface is fully standardized by 3GPP. The interface between the two transceivers, the Multi-UE 300 and the base transceiver 400 can be assumed to be implemented according to the above interface description. The interface between the embodiment of a system emulator 100 and the transceiver 200, as being one of the Multi-UE 300, may be defined as a propriety interface. An embodiment of an interface is described subsequently. In one embodiment there are different categories of information exchanged with the system emulator 100 which are explained in detail in the following.

The predefined simulation setting may correspond to a system configuration providing the information usually at the system setup, but might also be changed during the run when configurations are being modified. It might comprise one of or a combination of the group of a configuration of a virtual base transceiver (e.g. access scheme (OFDMA, SC-FDMA, WCDMA (WCDMA = Wideband Code Division Multiple Access) etc.), a cell configuration of the antennas, a duplexing mode (Time Division Duplex, Frequency Division Duplex, Half Duplex, etc.), a cell identification, a channel bandwidth, a transmit frequency, a reference signal power, an output power, an up- and downlink control channel configuration as well as a bearer configuration or a required downlink control information e.g. including uplink and downlink resource allocation or other transmission format information, a random access configuration, a processing capability, a load factor, a scheduling detail, an inter-cell interference parameter etc.), a cell structure (e.g. cell size, number of sectors, frequency use, user positions, user movement), a mobile transceiver configuration (UE class, transmit power, receiver noise level, receiver implementation, antenna configuration, etc.) or a radio channel configuration (e.g. channel models, pathloss parameter, shadowing parameter, fast fading parameter, shadowing maps etc.).

In other words, in an embodiment a predetermined simulation setting may comprise one of or a combination of the group of a cellular structure, a number of base station transceivers, a number of mobile station transceivers, a number of relay station transceivers, a size of the cells, a distance between the base station transceivers, a mobility model of the mobile stations, a channel model, a channel parameter, an access scheme, OFDMA, SC-FDMA, MIMO, a duplexing scheme (FDD = Frequency Division Duplex, TDD = Time Division Duplex, Half Duplex, etc.), a transmit frequency, a transmit power parameter, a carrier bandwidth, a carrier allocation, a traffic model, a traffic parameter, a quality of service setting, a base station transceiver scheduler algorithm, a scheduler parameter, a base station transceiver and mobile station transceiver radio barrier configuration and/or capability configuration, control channel configurations, an antenna configuration, a random access configuration and/or parameter setting, system information from the broadcast channel, radio resource control information, etc.

The predefined simulation setting may also comprise a system configuration. A system configuration could also provide some information on how two transceivers are connected in terms of the radio or physical channel to each other or how they are located to each other. This information may be considered in subsequent calculations that are performed by the system emulator 100. Alternatively a system configuration can also be obtained from the Multi-UE 300 device, i.e. from the transceiver 200. Although not shown in Fig. 2 a large part of this information can be received over the air by the mobile transceivers 300. This information can be forwarded to an embodiment of a system emulator 100. One example are Radio Resource Control messages that are sent from a base transceiver to the mobile transceivers to configure the mobile transceivers, e.g. RRC configuration message, RRC setup, RRC radio bearer configuration/ reconfiguration. This configuration could for instance be user specific configuration of the downlink control channel, the uplink control channel, the uplink feedback reporting, the user specific transmission of sounding reference signals etc. Other information can be read from the system information as sent on the broadcast control channel, e.g. provided as a transmission control measure from the transceiver 200 to the embodiment of the system emulator 100.

In an embodiment the control signal may correspond to downlink control information, which on the other hand may be provided to the system emulator 100 to consider the latest decision by the transceiver 200 under test in its calculations. Amongst others this can include information as one of or a combination of the group of a scheduling decision, a resource allocation, a modulation/coding parameter, a Transport Format, frequency hopping information, a MIMO transmit mode, MIMO precoding information, MIMO rank information, transmit power or receive power information, a control format indication, Hybrid ARQ information such as a redundancy version, a new data indicator, a HARQ process number etc. There can also be information that can be continuously exchanged such as a system frame number as timing reference. In turn, dependent of the predefined simulation setting some of the above examples of the control signal may be provided to the embodiment in terms of a transmission control measure. Embodiments may base simulations on such provided transmission control measure.

Based on the system configuration and the downlink control information an embodiment of the system emulator 100 may calculate the signal-to-interference-and-noise level for various users at different times, frequencies and/or different antennas. The system emulator 100 may provide every measurement as in a real system and provide decisions as in a real environment. Based on these measurements feedback information such as loss indication, measurement information, uplink transmit parameter or uplink control information can be sent to the mobile transceiver 200 as control signal. The behavior or the mobile transceiver 200 may be influenced by the different feedback information. Some example behaviors of a mobile transceiver 200 interacting with an embodiment are presented in the following.

Based on a loss indication as transmission quality measure or control signal the mobile transceiver 200 can decide about the correctness of a data reception. The loss indication can be specific to different control and data channels and decisions can be made as often as every slot or sub-frame.

In an embodiment of the apparatus 100 the apparatus 100 can be adapted for operating on a time basis in terms of a data packet, a PDU (PDU = Packet Data Unit), a TTI (TTI = Time Transmission Interval), a subframe, a slot, a radio frame, 0.1 ms, 0.2 ms, 0.5 ms, 1 ms, 2 ms, 5 ms, 10 ms, 20 ms, 50 ms or a 100 ms. In embodiments, the means 110 for simulating, the means 120 for mapping, the means 130 for determining, the means 140 for processing and/or the means 150 for outputting can be adapted for operating in terms of these respective time bases.

If a loss has been indicated the transceiver 200 might for instance drop the packet even if decoded correctly. Based on this information also Hybrid ARQ information (Acknowledgement or Not Acknowledgement) might be sent from the Multi-UE 300 to a base transceiver 400. Alternatively the transceiver might lose all data of a subframe if the control channel has been calculated as erroneous. In summary the data transmission between the base transceiver and the mobile transceiver(s) can be influenced by this setup in the same way as a real mobile user would be impacted when moving through a real network deployment. Thus even the end-to-end Quality of service as experienced by the user application can be used for analyses or demonstration purposes or as optimization criteria.

In the following some examples for the calculation of the loss indication for an embodiment in an LTE system will be provided.

In LTE the error models for a scenario can e.g. be related to the downlink physical channels, which are the PDSCH (PDSCH = Physical Downlink Shared Channel), the PCFICH (PCFICH = Physical Control Format Indicator Channel), the (PHICH = Physical Hybrid ARQ Indicator Channel), and the PDCCH (PDCCH = Physical Downlink Control Channel). Without losing generality, some specific examples are given for this scenario and for the LTE standard. In embodiments for example at every transmission time interval a PCFICH Error Indication, an PHICH Error Indication, an PDCCH Uplink Allocation Error Indication and an PDSCH error indication could be provided to the mobile transceiver 200 as transmission quality measure or control signal.

The PDSCH error modeling can be based on a full-scale system level simulation in an embodiments. For the PDSCH error modeling an embodiment of the system emulator 100 may apply the following logic:

- if the PDSCH reception fails
    o all receive data within that TTI can be assumed to be erroneous for that UE
    o at the next possible time an PDSCH error indication can be passed to the Multi-UE 300 indicating that the PDSCH reception in this TTI is erroneous.

The PDSCH error model can be based on a detailed calculation of an effective SINR per PRB (PRB = Physical Resource Block). The signal strength can be calculated considering path loss, shadowing, fading etc. The receiver UE noise figure can be a configurable parameter. For downlink inter-cell interference calculation a fixed eNB downlink transmit power can be assumed. PRBs can be randomly allocated in all the neighboring cells. A load factor can be configured that defines how many PRBs will be used on average. For each eNodeB (eNodeB = enhanced NodeB) the resource allocation can be pre-calculated and stored in files in the system emulator 100. The actual interference experienced by each UE can be calculated dynamically depending on the position of the user in the cell and the link conditions to all neighbor cells.

For PCFICH, PHICH and PDCCH error modeling simple error models with configurable error rates may be used in an embodiment. The error rates can be configured by the system configuration or the predefined simulation setting, via scripts or via a graphical user interface in embodiments.

In an embodiment, the apparatus 100 may further comprise a user interface for receiving a further simulation setting and the means for simulating 110 can be adapted for simulating the mobile communication network based on the further simulation setting.

In an embodiment the system emulator 100 can apply the following logic:

- if PCFICH reception fails
    o all control information (CFI (CFI = Control Format Indicator), HI (HI = Hybrid ARQ Indicator), DCI) within that TTI can be assumed to be erroneous for that UE
    o a PCFICH error indication can be passed to the Multi-UE for the respective UE and uplink transmission time interval

In an embodiment if a PCFICH error indication is sent, a PHICH error indication, a PDCCH downlink allocation error indication and a PDCCH uplink allocation error indication can be sent at the same time.

- if PHICH reception fails
    o all HI information within that TTI can be assumed to be erroneous for that UE
    o a PHICH error indication can be passed to the Multi-UE for that respective UE and uplink transmission time interval
    o PHICH groups may not be modeled
- if PDCCH reception fails
    o the DCI information of that PDCCH within that TTI may be assumed to be erroneous for that UE

In an embodiment the uplink and downlink resource allocation may have separate CRC and may be reported independently.

If a PDCCH carrying downlink allocation information is affected a PDCCH Downlink Allocation Error Indication may be passed to the Multi-UE for the respective UE and downlink transmission time interval at the next possible time. If a PDCCH carrying uplink allocation information is affected a PDCCH Uplink Allocation Error Indication can be passed to the Multi-UE for the respective UE and uplink transmission time interval at the next possible time.

In embodiments the means 110 for simulating can be adapted for simulating virtual measurements taken by the mapped virtual transceiver. The means 130 can be adapted for determining the virtual measurements of the mapped virtual transceiver, the means 140 for processing can be adapted for processing the virtual measurements to obtain realistic measurements. The means 150 for outputting can be adapted for outputting the realistic measurements to the transceiver 200. In embodiments, the realistic measurements may correspond to a measurement as defined in 3GPP TS 36.214 v8.6.0, March 2009: "Evolved Universal Terrestrial Radio Access (E-UTRA); Physical layer - Measurements".

In an embodiment, since the mobile transceiver 200 cannot make realistic measurements itself, it may rely on measurements that are provided from the system emulator 100 to the mobile transceiver 200 as transmission quality measure or control signal. The mobile transceiver 200 might use those measurements in decision making or might also send such information to a base transceiver 400. One example, is a handover measurement. Once the signal of a neighbor base station becomes larger compared to the own cell the mobile transceiver 200 may report measurements to the base transceiver 400, which in turn may make a handover decision. Details on measurements of the UE, which may be used in embodiments, are for example defined in 3GPP TS 36.214 v8.6.0, March 2009: "Evolved Universal Terrestrial Radio Access (E-UTRA); Physical layer - Measurements". Examples are measurements such as RSRP (RSRP = Reference Signal Received Power) and RSRQ (RSRQ = Reference Signal Received Quality). The configuration of the measurements and details of the reporting might be part of the system configuration or the predefined simulation setting. Such measurements can be included in RRC measurement reports, cf. 3GPP TS 36.331 v8.5.0, March 2009: "Evolved Universal Terrestrial Radio Access (E-UTRA); Radio Resource Control (RRC) specification", that are sent from the mobile transceivers to the base transceiver at certain events.

In an embodiment, the system emulator 100 can also transmit some Tx parameter (Tx = Transmission) to the mobile transceiver 200 as transmission quality measure or control signal that can be applied in subsequent uplink transmission. Such a parameter can again be calculated based on the input information, the mobile channel and interference calculation and so on. These uplink transmission parameters can be used to generate a transmit signal that will be received by the base transceiver 400 having the properties as being transmitted over a real channel. The transmit parameter can be sent as absolute value, e.g. a transmit power of a certain resource block or as relative value, e.g. an attenuation of a mobile channel, as control signal. Since the mobile channel is frequency selective the transmit parameter might be different for each carrier, each subcarrier or each physical resource block. The Uplink Fading Gain Indication per Physical Resource Block could be used to scale an absolute transmit power for the different Physical Channels. Based on this information the mobile transceiver 200 can calculate the overall transmit power for each uplink physical channel or physical signal considering UE and cell specific parameters e.g. a maximum UE Tx power, an SIR target, a broadcasted UL interference, power ramping for PRACH (PRACH = Physical Random Access Channel) retransmission etc.

For LTE the transmit parameter as an example for the control signal can be related to the transmission of the PUSCH (PUSCH = Physical Uplink Shared CHannel), PUCCH (PUCCH = Physical Uplink Control Channel) and the PRACH. The parameters can be mainly related to transmit power and timing advance. A very specific embodiment realization is given in the following. The embodiment of the system emulator 100 could calculate the effective normalized transmit power at PRB resolution according to the system level simulation including effects of the fading channel, i.e. pathloss, fast fading, slow fading (shadowing), antenna gains etc. At every TTI a PUSCH, PUCCH and PRACH Transmit Power Indication can be passed to the Multi-UE 300 for every active UE 200 to indicate the transmit power that should be applied by the Multi-UE 300 for that UE 200. The transmit power indications can be generic, relative power values considering the channel conditions, but not considering the dynamic cell behavior. In embodiments they may correspond to effective fading gains including antenna gains, fast fading, slow fading and distance-dependent path loss.

Thus the actual uplink transmit power can be calculated by the Multi-UE 300. The latter may use the system emulator's 100 transmit power indication to scale the absolute transmit power determined by the Multi-UE 300 considering various input parameters that can be signaled by the eNB 400 via broadcast (e.g. UL Interference Level, maximum allowed UE transmit power etc.) or via dedicated signaling (e.g. PUSCH or PUCCH power control etc.) or that are derived by the UE 200 itself (e.g. number of RACH retransmission for the power ramping etc.). The timing advance can be calculated by the system emulator 100 for example based on the distance between the virtual UE and the virtual serving eNB in the simulation. The Multi-UE 300 may use the Timing Advance information provided by the system emulator 100 to model the propagation delay caused by the physical transmission. In embodiments, at every TTI a Timing Advance may be passed to the Multi-UE 300 for every active UE to indicate the transmit timing that should be applied by the Multi-UE 300 for that UE 200. In other embodiments only Timing Advance Changes may be output to a transceiver 200.

The transmit parameter might also be the interference measure itself. The mobile transceiver 200 could add the interference measure to the transmit signal. The receive signal at the base transceiver 400 may thus look like a multi-cell receive signal with interference components from a large number of mobile transceivers in the neighbor cells as being modeled in the system emulator 100. In an extreme use case or embodiment the system emulator 100 may not comprise full functionality of the active cell itself (neither base transceiver 400 nor mobile transceivers 200), but just fully models the transceivers or the surrounding neighbor cells. The sole purpose would be to provide the interference measure to the transceiver 200 modeling the inter-cell interference. A single transceiver can thus be used to model the interference of a complete multi-cellular network. This test lab setup can be as accurate as the complete field trial or even more accurate since a much larger number of neighbor cells and neighbor transceivers can be modeled. The base transceiver without any modifications can be able to behave like in a real network, it can be able to make measurements and also experience decoding errors due to the described vitual mobile channel and due to the modeled inter-cell interference.

Besides the transmit parameter that influences the physical transmission there can also be UCI (UCI = Uplink Control Information), as transmission quality measure or control signal to the mobile transceiver 200. The UCI can actually be directly transmitted from the mobile transceivers to the base transceivers. The information obtained via the interface 150 can thus be encapsulated into a packet that is send to the Physical Layer at the mobile transceiver 200.

If the information provided over the proprietary interface is the same as the information exchanged between the MAC layer and the PHY, the implementation can be simplified. Nevertheless the actual UCI information can also be built by the mobile transceiver based on other transmission quality measures provided by the system emulator 100. The transmission quality measure can comprise channel quality reporting (e.g. as CQI (CQI = Channel Quality Indication), PMI (PMI = Pre-coding Matrix Indication), RI (RI = Rank Indication), ACK (ACK = Hybrid ARQ Acknowledgements) or NAKs (NAKs = Not Acknowledgements) or SR (SR = Scheduling Request). Details of the standardized Uplink Control Information can for example be found in 3GPP TS 36.212 v8.6.0, March 2009: "Evolved Universal Terrestrial Radio Access (E-UTRA); Multiplexing and channel coding" and 3GPP TS 36.213 v8.6.0, March 2009: "Evolved Universal Terrestrial Radio Access (E-UTRA); Physical layer procedures". The ACK/NACKs can be signaled explicitly to the mobile transceiver for inclusion into the UCI or can be part of the loss indication. One of the key advantages of embodiments can be that the Channel Quality Reporting as part of the UCI can be as accurate as in a real system and may not be statically generated.

As explained before the different information can be exchanged via a proprietary interface between the system emulator 100 and the mobile transceiver 200. Such information as explained above might be sent every slot or subframe or might only be sent from time to time or based on certain events. Embodiments of the system emulator 100 could be realised by a software running on a PC (PC = Personal Computer) while the transceiver 200 can be implemented on hardware. Since the PC may not run in real-time with a very accurate timing, some additional functionality may be implemented in the interface between the two entities in embodiments. The interface between the two entities may be fast enough to enable real-time processing and should be simple. The interface between the two entities might comprise a buffer that stores previously sent parameters and values. For instance in case of CQI reporting, as a transmission quality measure from the system emulator 100 to the mobile transceiver 200, the system emulator 100 can send the CQI every slot, sub-frame or radio frame to the mobile transceiver 200. The values are written into the buffer in the mobile transceiver 200 and only used once the CQI as part of the UCI is actually sent to the base transceiver 400. Thus the mobile transceiver 200 can operate in real-time while the system emulator 100 not necessarily needs to provide the measurements in real-time.

In another embodiment the system emulator 100 can be configured with a CQI reporting cycle as part of the system configuration and the system emulator 100 may only send the CQI to the mobile transceiver 200 once the report is required. Furthermore, a certain handshake protocol could be used to realize the interaction or a specified behavior might be implemented to show a consistent behavior even if some feedback information is missing due to the quasi real-time capability of the PC environment. A sequence number or slot, or sub-frame, or radio frame number might be added to the protocol to indicate the time relation of certain information delivered from the system emulator 100 to the mobile transceiver 200. In one simple embodiment a sub-frame number may be sent in parallel to the loss indication to indicate the packet or the sub-frame that the loss indication relates to. Since the system emulator 100 may not need to decode the packet in the PHY, but may just be modeling the losses, the loss indication might be send well ahead of the sub-frame at which the HARQ information has to be sent as part of the UCI. Such a novel setup will allow the PC based system emulator 100 to communicate with a real hardware 200. The mobile transceiver 200 might in turn provide each sub-frame downlink control information to the system emulator 100, which could also contain a sub-frame number to indicate the sub-frame that it relates to. The two entities could operate independently of each other using the sequence numbers to stay synchronized or could operate in a send and wait manner.

The information exchanged between the devices may not be limited to the description above in embodiments. There could for instance be a Graphical User interface connected to either of the devices showing actual state information, which once again would then have to be passed across the interfaces.

In summary the embodiment described above can facilitate a communication between transceivers over a mobile channel, with the channel realistically be modeled in a system emulator 100 and thus even without physical transmission over the air. Example use cases are eNB stress tests or performance test in a realistic system environment without hardware channel emulators or even field trial testbed environments. No modifications of the equipment under test are required, but the system emulator 100 may need to be connected to a mobile transceiver 200 that may need to implement the above-described interface.

In the following some more scenarios and use cases are described for embodiments. Although the information exchange is explained in less detail similar functionality can be assumed.

The testing over the air interface is the last test in the equipment testing, part of the so called end integration test. Integration of the different modules in a single device is usually a major effort with changes being limited to optimization of the module to meet the end performance and to work with the restrictions arising from the hardware restrictions. Changes to the functionality or algorithms itself are not foreseen at that state, since the hardware platforms are usually quite expensive. Particularly testing with real terminal implementations is limited to a small number of lab test environments, due to the enormous cost involved.

Alternatively, testing in a static scrip based test environment or peer to peer testing without the physical layer can help to test the functionality before the integration onto the hardware. Nevertheless these tests usually neglect the behavior of the physical layer and specific behavior as introduced by the physical channel. Sometime simple channel loss models are conventionally used to inject random errors. Alternatively error trace files can be used, but once again the interactions on system level cannot be modeled.

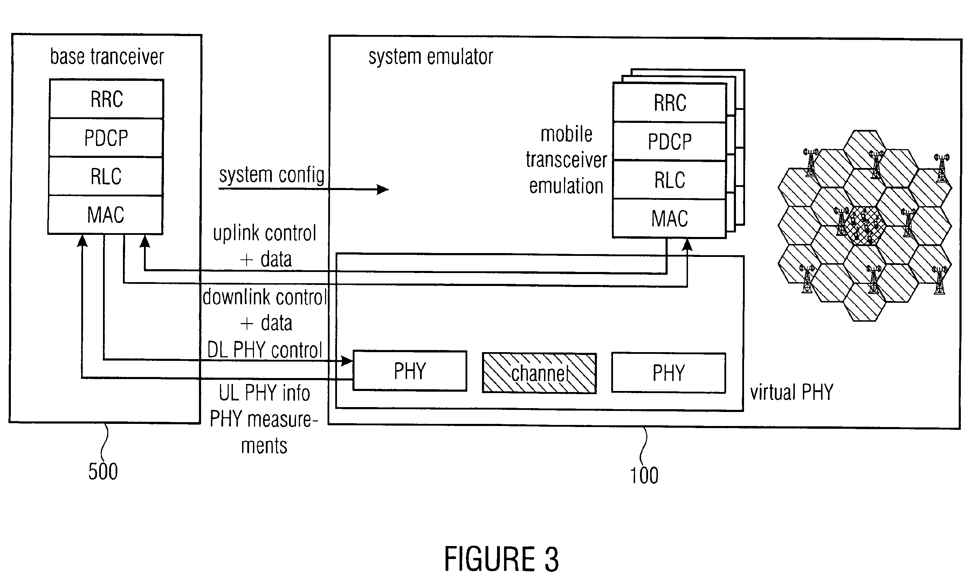

Fig. 3 illustrates another embodiment. Fig. 3 shows an embodiment of the apparatus 100, which is adapted for outputting a control signal to the base transceiver 500. In the embodiment shown in Fig. 3, the apparatus 100 is adapted for simulating a physical layer, a so-called virtual physical layer of at least one virtual mobile transceiver. The apparatus 100 can therefore be adapted for carrying out a combined emulation of the channel, the physical layer and the mobile transceivers. In embodiments, the means 130 for determining can be adapted for determining as the signal of the mapped virtual transceiver a protocol primitive. Accordingly, the means 140 for processing can be adapted for processing the protocol primitive to obtain the control signal, which may again correspond to a protocol primitive. The means 150 for outputting can be adapted for outputting a protocol primitive, which is exemplified in Fig. 3 by the information exchange between the apparatus 100 and the base transceiver 500. In Fig. 3 such protocol primitives are exemplified as uplink control and data, downlink control and data, downlink physical control and uplink physical control information, as well as physical layer measurements. In general, these protocol primitives are not limited to the primitives given in Fig. 3, where only some primitives between the physical layer and the MAC layer are exemplified in Fig. 3.

Embodiments may enable the testing of dynamic radio resource management functions or performance optimization of these functions. In Fig. 3 an alternative test setup is described which may be realized in an embodiment. In this case a complete radio protocol stack of a mobile transceiver can be part of the system emulator 100. Since the system emulator 100 as described above models an overall communication system, different parts of certain transceivers can be modeled within the system emulator 100 itself. The Physical Layer of the Mobile Transceiver and the Base Transceiver 500 may be bypassed and therefore a complete test could also be performed without the software running on external hardware.

Still the Physical Layer can be emulated in detail by an embodiment of an emulator device 100. Therefore no modifications may be required at the Base Transceiver 500 protocol under test and the interaction via primitives with the Physical Layer may be processed as by a real Physical Layer and can thus also be tested. Those messages or protocol primitives may include Downlink Physical Control messages that need to be known by the PHY (PHY = Physical Layer) to transmit and receive a signal as a real Physical Layer (e.g. cell configuration for antennas, duplexing mode, cell identifications, channel bandwidth, reference signal power, up- and downlink control channel configurations as well as bearer configurations or required downlink control information including uplink and downlink resource allocation or other format information, etc.).

Similarly there may Physical Layer information be provided by the emulator 100 to the base transceiver protocol stack. Part of the information such as Physical Layer measurements can be provided by an embodiment comprising a channel emulator 100 while other information can be obtained by the virtual PHY as e.g. timing information. The information for the system configuration or predefined simulation setting can be obtained via the DL PHY (DL = Downlink) Control or via a separate System Configuration. Since the interface between the Physical Layer and the MAC layer is not standardized the information exchange may partly be based on proprietary primitives in embodiments. Nevertheless the functionality of the layer is standardized, Downlink Control Information as transmitted on the PDCCH can be defined as well as Uplink Control Information as received on the PUCCH can be defined. This information as well as the payload data needs to be exchanged between the virtual PHY and the MAC layer. Once again the embodiment of the channel emulator 100 may provide loss indications for the data packets and may provide input or overwrite values for the Uplink Control Information.

While the last embodiment described above can also facilitate a communication between transceivers over a mobile channel there may be no need for a physical layer processing and there may be no need for a real physical mobile transceiver implementation, since the complete transceiver can be emulated in software itself. The setup may or may not run in real-time since the base transceiver may or may not yet run on the future target hardware. If the base transceiver can run in software on a PC there is actually no need for any hardware, the use might not be limited to end integration tests anymore since the setup can be provided for low cost to a large number or development engineers. A drawback may be that the system emulator 100 may need to communicate with the base transceiver 500 over a transceiver internal interface. Modifications may be done on the base transceiver 500 or the system emulator 100 side. In other words, the means 150 for outputting may be adapted to communicate with a corresponding protocol and interface at the base transceiver 500.

Embodiments may provide the advantage that follow up test cases can be conducted sequentially, e.g. first with the software based testing according to Fig. 3 as a system component test. Once those test cases have been passed, the modules can be integrated on the target hardware to conduct over the air testing according to Fig. 2 as part of the end integration test.

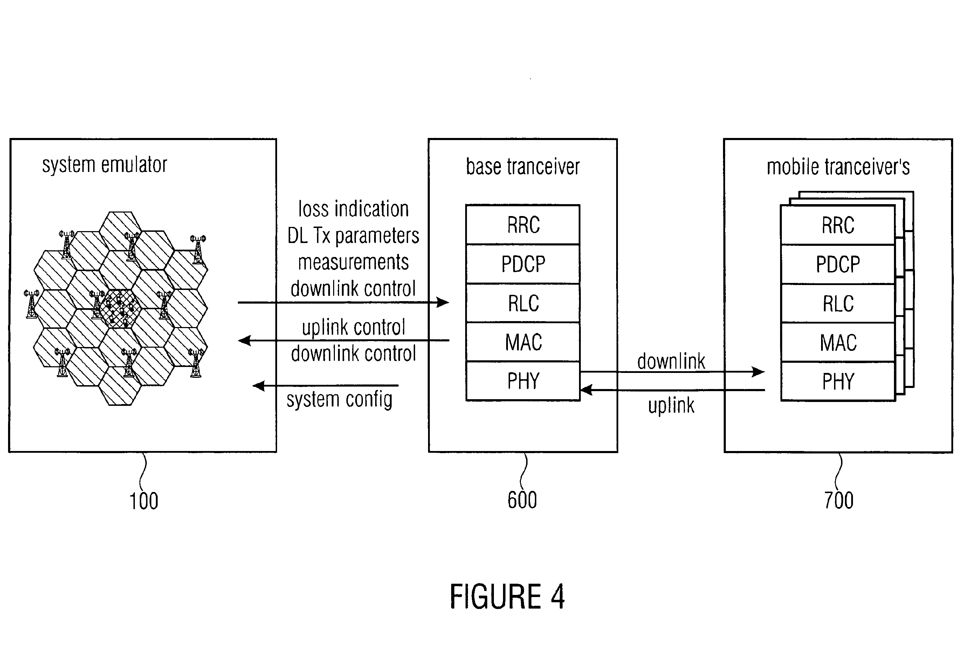

In the following, a third embodiment will be described using Fig. 4. Fig. 4 shows on the left hand side an embodiment of the apparatus 100. The apparatus 100 outputs the control signal to a base transceiver 600. In other words, in this embodiment, the transceiver 200 corresponds to base transceiver 600. The base transceiver 600 communicates with at least one mobile transceiver 700, where in Fig. 4 the mobile transceiver is displayed as a multi-UE.

Generally, between the base transceiver 600 and the mobile transceiver 700 there may be duplex communication, in terms of downlink communication from the base transceiver 600 to the mobile transceiver 700, and uplink communication from the mobile transceiver 700 to the base transceiver 600. Furthermore, Fig. 4 exemplifies the control signal communicated from the system emulator 100 as an embodiment of the apparatus 100, in terms of for example a loss indication, a downlink transmit parameter, measurements, downlink control information, etc. Moreover, in Fig. 4 transmission control measures are exemplified as uplink control or downlink control information, which are communicated from the base transceiver 600 to the apparatus 100. Moreover, a predefined simulation setting is provided to the apparatus 100 in terms of system configurations. Fig. 4 displays the protocol stack within the base transceiver 600 and within the mobile transceiver 700.

Fig. 4 illustrates a third realization of an embodiment which shows that the apparatus 100 can also be connected to a base transceiver 600 to model the transmission and reception of signals with realistic channel behavior. In other words Fig. 4 shows an embodiment of the apparatus 100 where the transceiver 200 corresponds to a base station transceiver 600.

The slit of functionality between the system emulator 100 can vary depending on the actual use case. The scheduler decisions, which are one of the most complex functions of the base transceiver 600, could for instance be realized in the system emulator 100 instead of the base transceiver 600 itself. In that case scheduling decisions can be communicated via downlink control information to the base transceiver 600, which applies these setting during the transmission to the mobile transceivers 700. This is an interesting scenario once an advanced scheduler is developed in an easy to use environment and later on be tested within a real environment with real hardware and real-time applications. Such a setup could be used for early prototypes of advanced features. A standard LTE base station could be used for the transmission of a signal as to be transmitted by a future LTE Advanced base station while the complete processing can be in software based system emulation instead of complex implementation on a real hardware, enable by an according embodiment.

As it was explained above, a system emulator as an embodiment of the apparatus 100 may provide full flexibility for various testing areas. In another setup a complete base transceiver may be emulated supporting at least one single mobile transceiver physically being connected to the system emulator 100. There may be a set of other mobile transceivers being modeled internally in the system emulator 100 to provide cell load and realistic scheduling.

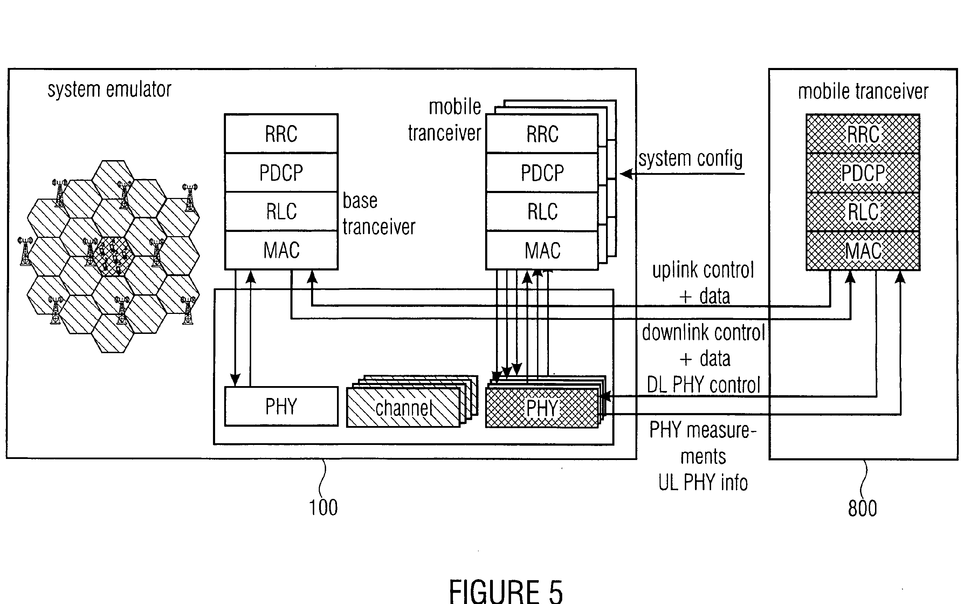

Such an embodiment is depicted in Fig. 5. Fig. 5 shows on the left hand side the system emulator as an embodiment of the apparatus 100 and a mobile transceiver 800 corresponding to the above mentioned transceiver 200. According to the principles explained above, the system emulator 100 may now provide all required physical layer functionality of the mobile transceiver 800 in a virtual physical layer. This is indicated within the apparatus 100 in Fig. 5, where the base transceiver is simulated within the apparatus 100, indicated by the entire base transceiver protocol stack. Moreover, the apparatus 100 may simulate the radio channels to multiple mobile transceivers, including all of the physical layers. Based on the predefined simulation setting, which is again exemplified as a system configuration in Fig. 5, all the higher layers of the mobile transceivers except for the mobile transceiver 800, are already simulated within the apparatus 100.

The protocol stack of the actual mobile transceiver 800 under test, can be tested having an according interface, i.e. the means 150 for outputting the control signal is in this case adapted accordingly, namely to communicate with layer 2 (MAC) of the mobile transceiver 800. The control signal is exemplified as downlink control and data, physical layer measurements or uplink physical layer information. Again, corresponding to the arrows pointing from the MAC layer of the mobile transceiver 800 to the apparatus 100, as a transmission control measure uplink control and data or downlink physical control data information may be provided by the mobile transceiver 800 to the apparatus 100. Among others, the control signal may again comprise a respective measurement. The measurement provided by the system emulator 100 could for instance trigger a cell change of the mobile transceiver 800 when in idle mode or trigger a handover measurement report from the mobile transceiver 800 when in active mode. For the handover modeling the system emulator 100 may also emulate the neighbor cell base station transceivers.

This use case or embodiment of the system emulation would provide a development and test environment for mobile transceiver implementations. For instance the optimization of layer 2 (MAC) protocol functions such as logical channel multiplexing and logical channel prioritization, where a mobile transceiver is responsible to map data from different radio bearers to an uplink resource allocation, is beneficial. Once again this setup may provide a software based environment, achieving the same cost savings as before while still being able to model realistic system behavior. Another example is the uplink channel reporting to support link adaptation where certain performance targets should be met and will also be tested. In LTE the mobile transceiver should provide a CQI, PMI and RI channel feedback reporting that meets an Block Error Rate performance of $10^{-3}$ if the base transceiver applies the settings as suggested by the mobile transceiver. This terminal behavior will be tested by the mobile operator to exclude intentional misbehavior of mobile transceiver to increase their user throughput.

Embodiments therewith provide the advantage that enhanced test scenarios are enabled, which enable the test of components of mobile communication networks in real conditions. Embodiments may provide the advantage that therewith the time to market may be reduced, development costs may be reduced, and testing times or lab times can be kept down.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

The inventive signal can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. An apparatus (100) for providing a control signal for a transceiver (200) of a mobile communication network, comprising
   a means (110) for simulating the mobile communication network in accordance with a predetermined simulation setting, the mobile communication network having a plurality of virtual transceivers;
   a means (120) for mapping the transceiver (200) to one of the plurality of virtual transceivers;
   a means (130) for determining a signal of the mapped virtual transceiver based on the simulation describing the behavior of the virtual transceiver in the mobile communication network based on the predetermined simulation setting;
   a means (140) for processing the signal to obtain the control signal;
   a means (150) for outputting the control signal to the transceiver (200).

2. The transceiver (100) of claim 1, wherein the means (110) for simulating is adapted for determining a propagation property measure of a virtual radio channel between the mapped virtual receiver and an other virtual transceiver based on the predetermined simulation setting, wherein the means (110) for simulating is further adapted for simulating an interference measure at a virtual location of the mapped virtual transceiver and/or at the virtual location of the other virtual transceiver, and wherein the means (130) for determining is adapted for determining the signal based on the propagation property measure and the interference measure.

3. The apparatus (100) of one claims 1 or 2, wherein the means (110) for simulating is adapted for simulating the mobile communication network comprising as a plurality of virtual transceivers at least one virtual base station and at least one virtual mobile station and wherein the means (120) for mapping is adapted for mapping the transceiver (200) to either the at least one virtual base station or the at least one virtual mobile station.

4. The apparatus (100) of one of claims 1 to 3 further comprising a means for receiving a transmission control measure from the transceiver (200) and wherein the means (110) for simulating is adapted for simulating the mapped virtual transceiver further based on the transmission control measure.

5. The apparatus (100) of claim 4, wherein the transmission control measure corresponds to one of or a combination of the group of downlink control information, a resource allocation, a modulation parameter, a coding parameter, a transport format, a frequency hopping information, an MIMO transmit mode (MIMO = Multiple-Input-Multiple-Output), MIMO precoding information, MIMO rank information, transmit power information, receive power information, a control forward indication, hybrid ARQ information (ARQ = automatic retransmission request), a redundancy version, a new data indicator, an HARQ process number (HARQ = hybrid ARQ), a transmit power control command, a channel quality measurement, a channel quality indicator, transport information, suggested precoding information, codebook based precoding information, a precoding matrix indicator, a rank indicator, a hybrid ARQ acknowledgement, a hybrid ARQ not acknowledgement or an error indication.

6. The apparatus (100) of one of the claims 1 to 5, wherein the means (110) for simulating is adapted for basing the simulation on the predetermined simulation setting in terms of one of or a combination of the group of a cellular structure, a number of base station transceivers, a number of mobile station transceivers, a number of relay nodes, a size of a cell, a distance between base station transceivers, a mobility model of a mobile station, a channel model, a channel parameter, an access scheme, a duplexing scheme, a transmit frequency, a transmit power parameter, a carrier bandwidth, a carrier allocation, a traffic model, a traffic parameter, a quality of service setting, a base station transceiver scheduler algorithm, a scheduler parameter, a base station transceiver and mobile station transceiver radio bearer configuration, a capability configuration, a control channel configuration, an antenna configuration, a random access configuration, a random access parameter setting, system information from a broadcast channel, radio resource control information, or geographical data.

7. The apparatus (100) of the claims 1 to 6, wherein the means (140) for processing is adapted for obtaining as control signal one of or a combination of the group of a loss indication, an attenuation, a transmit power, a transmit power offset, a timing advance, an error, a successful reception flag, a channel quality measurement, a channel quality indicator, a transport format, suggested precoding information, codebook based precoding information, a precoding matrix indicator, a rank indicator, a hybrid ARQ acknowledgement, a hybrid ARQ not acknowledgement, a transmit power control command, a transmit power measure, a power headroom report, a scheduling decision, a resource allocation, a modulation parameter, a coding parameter, frequency hopping information, an MIMO transmit mode, MIMO precoding information, MIMO rank information, receive power information, a control format indication, hybrid ARQ information, a redundancy version, a new data indicator, an HARQ process number, measurement information of a receive signal, a reference receive signal power, a reference signal received quality, a received signal code power, a received signal wideband power, received signal strength information, a received energy per chip, received energy per chip divided by the power density, a pilot channel strength measurement, measurement information of a transmitted signal, a downlink reference signal, transmit power, a received interference power, a thermal noise power or system information.

8. The apparatus (100) of one of the claims 1 to 7, wherein the means (120) for mapping is adapted for mapping a plurality of mobile transceivers to the plurality of virtual mobile transceivers, wherein the means (130) for determining is adapted for determining a plurality of signals from the plurality of mapped virtual mobile transceivers, wherein the means (140) for processing is adapted for processing the plurality of signals to obtain a plurality of control signals and wherein the means (150) for outputting is adapted for outputting the plurality of control signals to the plurality of mobile transceivers.

9. The apparatus (100) of one of the claims 1 to 8, wherein the means (110) for simulating, the means (120) for mapping, the means (130) for determining, the means (140) for processing or the means (150) for outputting is adapted for operating on a time basis in terms of a data packet, a PDU (PDU = packet data unit), a TTI (TTI = time transmission interval), a subframe, a slot, a radio frame, 0.1ms, 0.2ms, 0.5ms, 1ms, 2ms, 5ms, 10ms, 20ms or 50ms.

10. The apparatus (100) of one of the claims 1 to 9, wherein the means (110) for simulating is adapted for simulating a virtual measurement taken by the mapped virtual transceiver in the mobile communication network, the means (130) for determining is adapted for determining the virtual measurement of the mapped virtual transceiver, the means (140) for processing is adapted for processing the virtual measurement to obtain a realistic measurement, and wherein the means (150) for outputting is adapted for outputting the realistic measurement to the transceiver (200).

11. The apparatus (100) of claim 10, wherein the realistic measurement corresponds to a measurement as defined in 3GPP TS 36.214 v8.6.0, March 2009: "Evolved Universal Terrestrial Radio Access (E-UTRA); Physical layer - Measurements".

12. The apparatus (100) of one of the claims 1 to 11, wherein the means (130) for determining is adapted for determining as the signal of the mapped virtual transceiver a protocol primitive.

13. The apparatus (100) of one of the claims 1 to 12, further comprising a user interface for receiving a further simulation setting and wherein the means (110) for simulating is adapted for simulating the mobile communication network based on the further simulation setting.

14. Method for providing a control signal for a transceiver of a mobile communication network, comprising
simulating the mobile communication network in accordance with a predetermined simulation setting, the mobile communication network having a plurality of transceivers;
mapping the transceiver to one of the plurality of virtual transceivers;
determining a signal of the mapped virtual transceiver based on the simulation describing the behavior of the virtual transceiver in the mobile communication network based on the predetermined simulation setting;
processing the signal to obtain the control signal; and
outputting the control signal to the transceiver.

15. A computer program having a program code for performing the method of claim 14 when running on a computer or a processor.

FIGURE 1A

FIGURE 1B

FIGURE 2

EP 2 330 843 A1

base tranceiver

| RRC |
| PDCP |
| RLC |
| MAC |

system emulator

mobile
transceiver
emulation

| RRC |
| PDCP |
| RLC |
| MAC |

system config

uplink control
+ data

downlink control
+ data
DL PHY control

| PHY | channel | PHY |

virtual PHY

UL PHY info
PHY measure-
ments

500

100

FIGURE 3

EP 2 330 843 A1

mobile tranceivers

| RRC |
| PDCP |
| RLC |
| MAC |
| PHY |

700

downlink

uplink

base tranceiver

| RRC |
| PDCP |
| RLC |
| MAC |
| PHY |

600

loss indication
DL Tx parameters
measurements
downlink control

uplink control

downlink control

system config

system emulator

100

FIGURE 4

FIGURE 5

**EUROPEAN SEARCH REPORT**

Application Number

EP 09 17 7925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHEETALKUMAR DOSHI ET AL: "Network Design and Implementation using Emulation-Based Analysis" MILITARY COMMUNICATIONS CONFERENCE, 2007. MILCOM 2007. IEEE, IEEE, PISCATAWAY, NJ, USA, 29 October 2007 (2007-10-29), pages 1-8, XP031232479 ISBN: 978-1-4244-1512-0 | 1,4,8, 13-15 | INV. H04W24/06 H04B17/00 |
| Y | * abstract * | 3 | |
| A | * column 3, lines 30-51 * <br> * column 4, lines 6-16 * <br> * column 4, line 17 - column 5, line 7 * <br> * column 7, lines 1-30 * <br> * column 7, lines 31-37 * <br> * column 8, lines 1-16 * <br> * column 9, line 1 - column 10, line 12 * <br> * column 11, lines 1-4 * <br> * column 11 * <br> ----- | 2,5-7, 9-12 | |
| X | ACM, 2 PENN PLAZA, SUITE 701 - NEW YORK USA, vol. 33, 31 January 2003 (2003-01-31), XP040149417 | 1,14,15 | |
| Y | * column 1, lines 12-15 * | 3 | |
| A | * column 1, lines 34-38 * <br> * column 3, lines 37-54 * <br> * column 4, lines 4-25 * <br> * column 5, lines 44-60 * <br> ----- | 2,4-13 | |
| Y | US 2004/214564 A1 (ROSEN DEREK [US] ET AL) 28 October 2004 (2004-10-28) | 3 | |
| A | * paragraph [0004] * <br> * paragraph [0006] - paragraph [0008] * <br> * paragraph [0005] * <br> * paragraph [0017] * <br> * paragraph [0018] - paragraph [0019] * <br> ----- <br> -/-- | 1,2,4-15 | |

**TECHNICAL FIELDS SEARCHED (IPC)**

H04W
H04B
H04L

The present search report has been drawn up for all claims

| Place of search | Date of completion of the search | Examiner |
|---|---|---|
| The Hague | 20 April 2010 | Losada Corderí, Iker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 17 7925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/282247 A1 (BRENNAN JAMES T [US] ET AL) 14 December 2006 (2006-12-14)<br>* paragraph [0012] *<br>* paragraph [0016] *<br>* paragraph [0023] *<br>* paragraph [0014] *<br>----- | 1-15 | |
| A | US 2006/223522 A1 (GUO ZIHUA [CN] ET AL) 5 October 2006 (2006-10-05)<br>* paragraph [0001] *<br>* paragraph [0025] *<br>* paragraph [0036] *<br>----- | 1-15 | |
| A | WO 2005/006010 A2 (NOKIA CORP [FI]; NOKIA INC [US]; GREEN MARILYNN P [US]; WANG SHU-SHAW) 20 January 2005 (2005-01-20)<br>* page 1, lines 19-35 *<br>* page 4 - page 5 *<br>* page 6, line 33 - page 7, line 3 *<br>* page 8, lines 22-32 *<br>* page 12, lines 26-32 *<br>* page 17, lines 22-33 *<br>----- | 1-15 | |
| A | US 2006/229019 A1 (MLINARSKY FANNY [US]) 12 October 2006 (2006-10-12)<br>* paragraph [0009] *<br>* paragraph [0010] - paragraph [0013] *<br>* paragraph [0041] *<br>* paragraph [0043] *<br>* paragraph [0047] - paragraph [0048] *<br>* paragraph [0055] - paragraph [0056] *<br>* paragraph [0096] - paragraph [0097] *<br>* paragraph [0106] *<br>-----<br>-/-- | 1-15 | TECHNICAL FIELDS SEARCHED (IPC) |

The present search report has been drawn up for all claims

| Place of search | Date of completion of the search | Examiner |
|---|---|---|
| The Hague | 20 April 2010 | Losada Corderí, Iker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 17 7925

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SIEBRA C A ET AL: "An application of autonomic concepts for handset network test control" CONTROL APPLICATIONS, (CCA)&INTELLIGENT CONTROL, (ISIC), 2009 IEEE, IEEE, PISCATAWAY, NJ, USA, 8 July 2009 (2009-07-08), pages 671-676, XP031542929 ISBN: 978-1-4244-4601-8 * abstract * | 1-15 | |

-----

TECHNICAL FIELDS
SEARCHED     (IPC)

The present search report has been drawn up for all claims

| Place of search | Date of completion of the search | Examiner |
|---|---|---|
| The Hague | 20 April 2010 | Losada Corderí, Iker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 17 7925

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2010

| Patent document cited in search report | | | Publication date | Patent family member(s) | | Publication date |
|---|---|---|---|---|---|---|
| US 2004214564 | A1 | | 28-10-2004 | NONE | | |
| US 2006282247 | A1 | | 14-12-2006 | NONE | | |
| US 2006223522 | A1 | | 05-10-2006 | NONE | | |
| WO 2005006010 | A2 | | 20-01-2005 | CN | 1826740 A | 30-08-2006 |
| | | | | EP | 1639732 A2 | 29-03-2006 |
| | | | | US | 2007019769 A1 | 25-01-2007 |
| US 2006229019 | A1 | | 12-10-2006 | NONE | | |

EPO FORM P0459

For more details about this annex : see Official Journal of the European Patent Office, No. 12/82